# EUROPEAN PATENT APPLICATION

(11) **EP 1 162 827 A2**
(43) Date of publication of application: **12.12.2001**
(21) Application number: 01304397.1
(22) Date of filing: 17.05.2001
(51) Int. Cl.: H04N 3/15

(54) **Apparatus and methods for phase-sensitive imaging**

(30) Priority: 17.05.2000 GB 0011822
(71) Applicant: Photonic Research Systems Limited, Salford M6 6AP (GB)
(72) Inventor: Mitchell, Andrew C., Chorlton-Cum-Hardy, Manchester M21 9HH (GB); Morgan, Christopher C., Irlam, Manchester M44 6DJ (GB)
(74) Representative: Atkinson, Peter Birch

(57) **Abstract**

Apparatus and methods are disclosed foe phase-sensitive measurements of optical signals utilising semiconductor array detectors such as CCD sensors. The sensors are operated under conditions where changes are moved bi-directionally according to a predetermined scheme and/or the spatial extent of charge collection from pixels of the array is controlled. Applications of phase-sensitive detection to decay-time-related measurements of luminescence are presented.

## Description

The present application relates to improved apparatus for time-resolved optical detection and imaging and is particularly suited to time-resolved measurements of luminescence (i.e. fluorescence, phosphorescence and the like). The invention also relates to methods for time-resolved measurements of optical signals using spatially-resolving solid-state detectors.

Measurements of optical signals are widely used in science and technology, for example in areas such as telecommunications, remote sensing, clinical assay, optical microscopy and in numerous other applications. For some purposes it is important to measure the temporal profile of an optical signal, to characterise the signal at a fixed time position synchronised to some physical event, or to measure the time delay between a stimulus and an optical signal. Common examples of such measurements include the stroboscopic imaging of rotating and vibrating machinery, synchronised imaging of high-speed events such as collisions, explosions and the like, and optical range-finding. Specialist applications are also to be found in scientific fields, for example where spectroscopic processes are studied. In the following text discussion of the measurement of optical signals will be given in the context of imaging and/or spatially-resolved detection. It should be noted however that the measurement principles apply equally to detection where spatial resolution is of little or no interest, but where the high sensitivity and/or low noise characteristics of semiconductor detectors are paramount. Thus, an array detector might be used, combining the information from some or all of the elements of the array to increase signal levels.

Electronic detectors capable of providing spatially-resolved information are commonplace, finding application in video 'camcorders', security cameras, electronic still cameras, scanners, bar-code readers and in many other areas. Such detectors are usually solid-state semiconductor devices, which have advantages over older technology in terms, for example, of small size, low power consumption, high sensitivity, wide dynamic range, extended integration capability and compatibility with computer technology. There are a number of technologies and device architectures in use at present for spatially-resolved detection. Charge-coupled devices (CCDs), charge-injection devices (CIDs), metal-oxide semiconductor (MOS) sensors and others are well known. The present invention relates primarily to a CCD sensor, but it is to be understood that in principle other detection technologies might also be used, subject to the requirements set out in the descriptions of the invention.

Solid-state image sensors comprise an array of light-sensitive elements or 'pixels', each of which accumulates charge in response to light exposure. After a suitable exposure period the accumulated charge in each pixel of the device is sensed and an electrical signal proportional to the charge is generated. Thus an electronic sensor requires at least a mechanism to sense the charge level in a given pixel. In a CCD this process requires the charge to be transported from each pixel to a readout register, often via an intermediate 'masked' storage region which is insensitive to light. In sensors such as CIDs the accumulated charge is not transferred directly to a readout region, but is scnscd via a displacement current generated as the charge is moved within the semiconductor.

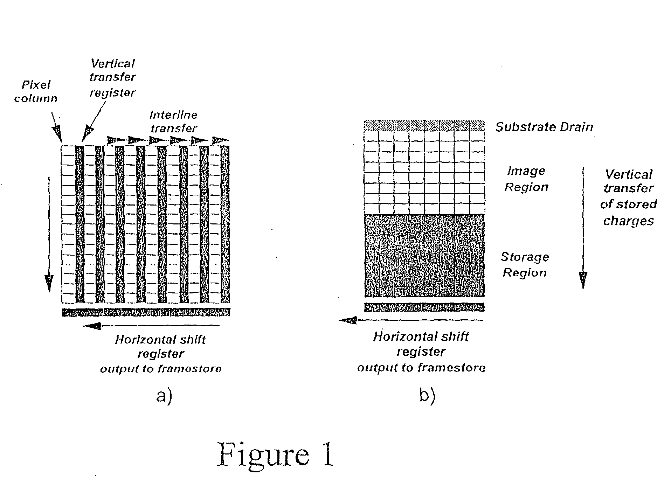

CCD array detectors fall broadly into two categories, although hybrids are also known. One type of sensor is an 'interline-transfer' device, where columns of light-sensitive pixels are associated with columns of storage elements which are insensitive to light, and to which charge from pixels can be transferred. The storage elements are arranged as transfer registers communicating with a horizontal readout register. Charges can be transferred, one row at a time, into the horizontal register, from which they are read out sequentially. A simplified outline of an interline-transfer sensor is shown in Figure 1a.

A second type of sensor is known as a 'frame-transfer' sensor, In this design, pixels are arranged as a matrix of rows, and charges can be moved between rows in response to control signals. Charges are transferred one row at a time into a horizontal transfer register from which they are read out sequentially. In this design, it is common to split the sensor into two halves, one of which is shielded from light by an opaque mask and communicates with the horizontal readout register. The shielded region and the light sensitive region of the sensor usually have independent charge-transfer controls. This design allows charges to be transferred at high speed from the light-sensitive region to the shielded region for temporary storage. High transfer rates are important because the pixels remain sensitive to light at all times. Unacceptable 'smearing' of images would result from a slow transfer rate, unless the sensor is not exposed to light during the transfer process. The data in the shielded region can be read out during a subsequent exposure of the light-sensitive region. This design has the advantage that the readout rate is decoupled from the rate of charge transfer between columns of pixels, and can be optimised for a given application. In designs where no shielded region is used, the sensor is sometimes called a 'progressive scan' device. Progressive scan sensors are usually used with associated optical shutters or with pulsed light sources that are switched off during readout.

In some sensor designs a drain structure is also provided to which charges can be transferred to reset the sensor. Transfer of charges to this drain structure usually is achieved in the same manner as transfer to the horizontal readout register, but in the opposite direction. Thus, in many sensor designs it is possible to move charges at high speed between adjacent rows of pixels in either direction. A simplified diagram of a frame-transfer sensor is shown in Figure 1b.

CCD sensors of all types have a group of electrodes associated with each pixel. The pattern of potentials on these electrodes defines the centre of charge collection for the associated pixel, and can in some cases effectively define the area from which charge is accepted in the semiconductor structure. The electrode set also has the function of allowing charges to be moved in an orderly fashion between rows of pixels, and/or between pixels and associated storage registers. In order to move charges, the pattern of potentials on a defined group of pixels is varied in a systematic manner so as to alter the shape and position of potential wells in the semiconductor structure. Details of the design of typical CCD sensors in general terms is given in 'Charge-Coupled Devices', (D.F. Barbe ed., 1980, Springer Verlag, New York), for example, and in manufacturers data sheets and related publications (see for example 'CCD Imaging III', EEV Technical Publications, EEV, Chelmsford, Essex, UK).

A common application of CCD sensors has been as a solid-state replacement for the vacuum imaging tubes used in earlier TV cameras and surveillance cameras. For video use, traditionally cameras scan and present an image in a so-called 'interlaced' mode to minimise the visual sensation of lag associated with the time to read out a complete image to a video monitor. Thus, a video camera usually scans an image in a raster fashion and subsequently re-scans the image interleaving the second scan with the first. CCD cameras do not 'scan' an image directly, but it has proved convenient to implement an imaging mode having a similar effect to interlaced scanning. In this mode, a CCD camera is first used to acquire an image for a fixed time, after which the image is read out. The centre of charge collection of pixels in the image sensor is then moved slightly by altering the pattern of charges defining the limits of each pixel. A second image is then accumulated and displayed. The alternate presentation of pairs of images, where the effective optical centre of each pixel has been displaced between the images, has a similar effect to a traditional interlaced display. Interlaced imaging offers an effective means to increase the resolution of a CCD detector, and is possible because the pixels of the sensor are not merely physical regions, but are also defined by charge patterns on associated control electrodes.

The present invention provides means to implement time-resolved imaging using semiconductor array detectors, most particularly CCD detectors. This capability is possible as a result of the control of charge movement associated with the control electrodes of the sensor. The invention will be described in terms of 'phase-sensitive' imaging. This term is to be understood to mean acquisition of data using an array detector, where the acquisition is split into at least two time periods giving rise to at least a pair of data sets that are co-resident in the array sensor before readout. Integration of the data sets is synchronised to an external event. The imaging apparatus can be used either as a 'master' device generating synchronising signals to initiate external events or as a 'slave' device responding to external events. In the following text the term 'frame-transfer' will be used in a general sense to describe sensor architecture where charge is transferred from one row of pixels to another. It should be understood that, unless specifically stated, the arguments and claims apply equally to 'progressive scan' sensors.

A method to use a 'frame-transfer' type of CCD as a phase-sensitive detector has been published by Povel *et al* in the context of imaging polarised light (Povel, H.P., Keller, C.U. and Yadigaroglu, I.A., Applied Optics (1994), 33(19), pp 4254-4260). In this paper, a CCD was disclosed where alternate rows of pixels were covered with an opaque striped metal 'mask'. The CCD was specially manufactured by EEV Ltd for a research programme in astronomy and to our knowledge no such sensor is available commercially. The CCD was used synchronised to the operation of an electro-optic device which analysed the polarisation state of light reaching the sensor. The mode of operation involved repetitively moving the centre of charge-collection up and down between rows of pixels. By this means the detected image is effectively split into two interleaved sub-images, each associated with a particular polarisation state. In one 'phase' of the imaging process charge is collected from exposed pixels that are not masked. In the other 'phase', the collected charge is moved into the masked regions and a second image accumulates in the light-sensitive regions. The repetitive cyclical nature of the operation ensures that the sub-images can integrate signal until a useful level of charge is accumulated, while remaining phase-locked to the operation of the polarisation-analysing device.

A similar principle to the cited work was disclosed by us in 'New Approaches to Lifetime-Resolved Luminescence Imaging' (C.G. Morgan et al, (1997), Journal of Fluorescence, 7(1), 65-73). The paper also disclosed a different principle for phase-sensitive imaging, based on the use of an interline-transfer CCD to integrate long-lived luminescence in the presence of short-lived background signals.

Although the masked frame-transfer CCD offers an interesting means of phase-sensitive imaging, it is not without disadvantages. The use of an opaque mask obviously reduces the spatial resolution of the detector, but also can reduce sensitivity to less than half of that for an unshielded detector. In the cited reference to the EEV device it is disclosed that the metal mask must cover more than half of the pixel area to avoid problems with leakage of light between shielded and unshielded rows of pixels. In this implementation of phase-sensitive imaging therefore it is clear that the sub-images are envisaged to be wholly independent. The cited work discloses only an opaque mask, and does not consider possible implementations where the mask is partially transmissive, or where an optical device is used to concentrate light selectively in alternate rows of pixels for example. A further disadvantage of the disclosed CCD is that its properties are fixed at manufacture. Production of a masked CCD for special purposes is an expensive undertaking, and no manufacturer offers such a CCD as a standard item. It is worth noting that an interline-transfer CCD does have an alternating structure comprising masked columns of storage pixels and light-sensitive columns of imaging pixels, and this is a standard architecture. Thus bi-directional charge transfer between columns, rather than rows as disclosed, would be suitable for phase-sensitive imaging. In most types of interline sensor, it is possible to control the flow of charge from pixels to the storage region, but not in the opposite sense, so that this mode of operation is not routine. However, if the pixel structure and charge transfer architecture permit bi-directional transfer an interline-transfer sensor might be used to advantage.

The present invention discloses means to perform phase-sensitive imaging with frame transfer CCD sensors and similar devices, based on the ability to transfer charge bi-directionally between rows or columns of pixels and/or to manipulate the pattern of potential under a plurality of electrodes defining a light sensitive pixel so as to alter the effective sensitivity to light thereof in a cyclical manner. In some but not all embodiments of the invention a periodically or aperiodically masked CCD is used.

In a first embodiment of the invention, an apparatus for phase-sensitive imaging is provided comprising:
* an array detector having light-sensitive pixels arranged in a matrix, each pixel being associated with a plurality of control electrodes capable of being programmed to assume variable patterns of potential, said electrodes being able to control at least movement of light-generated charge from said pixel
   said detector being characterised in that the light-sensitive region of the detector is not associated with an integral striped opaque mask covering alternate rows of pixels
* control means to generate said patterns of potential in a pre-programmed sequence that alternately transfers charge between adjacent rows or between adjacent columns in a cyclical bi-directional manner, the said charge being moved first in one direction through a pre-programmed number of transfers and next in the other direction for the same number of transfers in each cycle, the duration of each transfer or sequence of transfers and the cycling frequency additionally being controlled
* optional synchronisation means whereby the operation of the said control means can be phase-locked to operation of external devices
* programming means to set the parameters of the said control means and optionally other operating parameters of the said apparatus
* readout means to transfer charge or information proportionate thereto to a digitising device for storage and/or display and
* optional computational means to process digitised data and optionally to display information calculated using said data.

The apparatus of this embodiment of the invention (and other embodiments utilising charge transfer) allows an image to be measured that is the sum of at least two interleaved images.

The apparatus of the invention utilises a cyclical process where charge is transferred bi-directionally between rows (or columns) of pixels and is most suited to imaging samples where a related stimulus is provided to which the sample of interest responds, and where operation of the apparatus of the invention can be synchronised with the stimulus. As an example, if a fluorescent sample is excited by a square-wave pulsed light source, it will emit light continuously during the periods where the light source is on, and will also give decaying emission during the periods when the light is off. If the apparatus described is synchronised to the square wave light source, then it can record images representative of both the "on" and "off" periods simultaneously. The images will be interleaved, and each will represent the average over the defined exposure period for light emitted during the respective periods of operation of the light source.

Transfer of charges according to the invention can be between adjacent rows (or columns) of pixels, or alternatively the charges might be transferred rapidly through several rows or columns of pixels, so as to increase the spatial displacement between interleaved images.

A detector as described in the first embodiment of the invention is primarily suited to measurements of an image where either substantial gradients of intensity are present as a result of the structure of the object of interest, or where such gradients can be imposed on such an object by patterned illumination, or by re-imaging of an intermediate image that has been modified by a spatial filtering operation. For applications such as these, the detector need have no integral mask. Alternatively, an integral mask might be present, but associated not with rows, but with columns of pixels as is usual in an interline-transfer array. The mask might also be one which has a chequered structure or an aperiodic structure.

An example of the application of the invention where gradients of intensity exist in the object of interest is the use of the detector for resolution of long-lived luminescence of an array of microscopic samples against a background of short-lived luminescence, Thus, the samples of interest are physically distinct and arrayed in a periodic fashion.

Microscopic arrays of proteins, nucleic acid sequences and the like are now becoming available for use in screening protocols, for example in drug-discovery programmes. A common requirement is to test such an array with a 'probe' reagent to detect regions where the 'probe' binds and to determine the level of such binding. The binding process can often be detected using labels that emit luminescence, because of the high detection sensitivity that is possible. The detection sensitivity is often limited by background, particularly from the matrix on which the array of samples is deposited. Such background often has a short emissive lifetime, so that use of a long-lived label with time-resolved detection can be effective in background suppression. If such an array, having bound a luminescent label, is illuminated by a repetitive pulsed or modulated source of exciting radiation and the charge transfer in the detector is phase-locked to the fluctuation of the excitation, a composite image is integrated. The image approximates to two sub-images superimposed, but displaced by a known distance in one dimension, according to the distance through which charge is transported in the detector. One of the images represents the sum of short-lived background and a fraction of the long-lived emission of interest. The other sub-image has less of the short-lived background and a further fraction of the long-lived emission. Thus, by suitable choice of modulation scheme it can be arranged that one sub-image is essentially free of short-lived emission but retains a significant fraction of long-lived emission. For example, if the emission is excited by a square-wave light source with equal 'on'-'off' periods it can easily be arranged that the long-lived emission is effectively demodulated, while much shorter-lived background preserves a high modulation depth. Given the knowledge of the weightings of the long- and short-lived components of the sub-images, these can easily be decomposed into two independent images, and the contribution of the long-lived component of interest can thus be measured. It is useful to measure an image without modulation of the charge-transport in the detector to assist in this analysis, since this represents the sum of the total long-lived emission and the total short-lived emission, each having its characteristic spatial distribution.

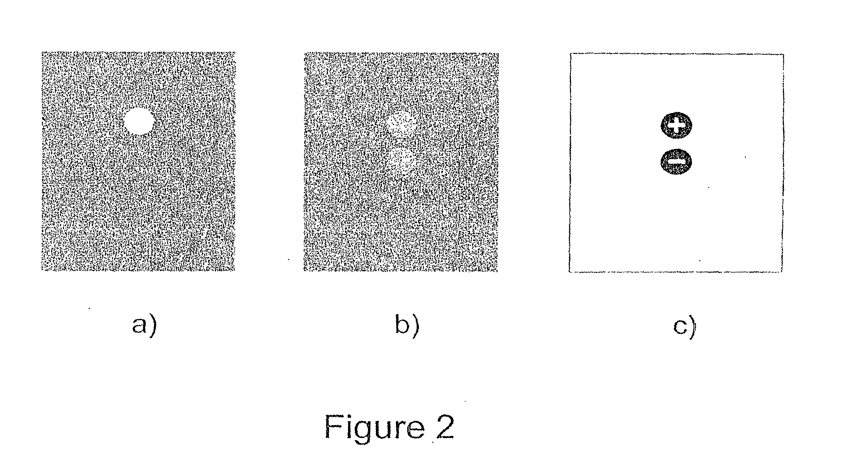

A simplified example of the operation of the invention according to the above embodiment is given in Figure 2. This shows in schematic form a spatially-defined region of long lived emission superimposed on a background of short-lived emission. Figure 2a shows the image of the sample that would be measured if the detector is operated without modulation of charge transfer, while Figure 2b shows the effect of modulation. The difference between Figures 2a and 2b is shown in Figure 2c, where the short-lived background is lost and two representations of the long-lived emission remain, one as a positive image and the other as a set of negative values. The absolute value of each of these representations can be summed to measure the contribution of the long-lived component and this can be subtracted from Figure 2a to give a representation of the short-lived component of emission where this is of interest. The principles outlined can of course be modified to image a relatively short-lived species in the presence of a substantially longer-lived background. This situation is sometimes encountered where a background support shows significant levels of long-lived phosphorescence, for example.

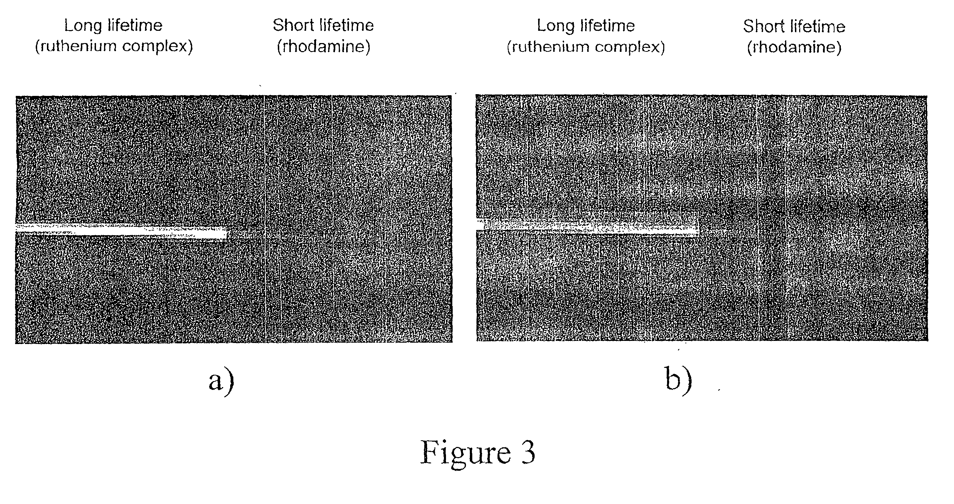

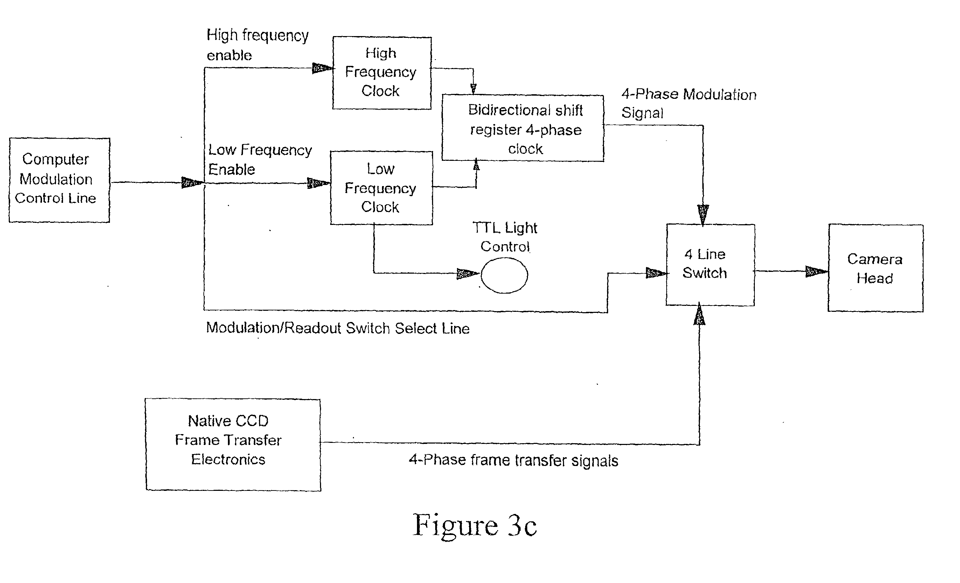

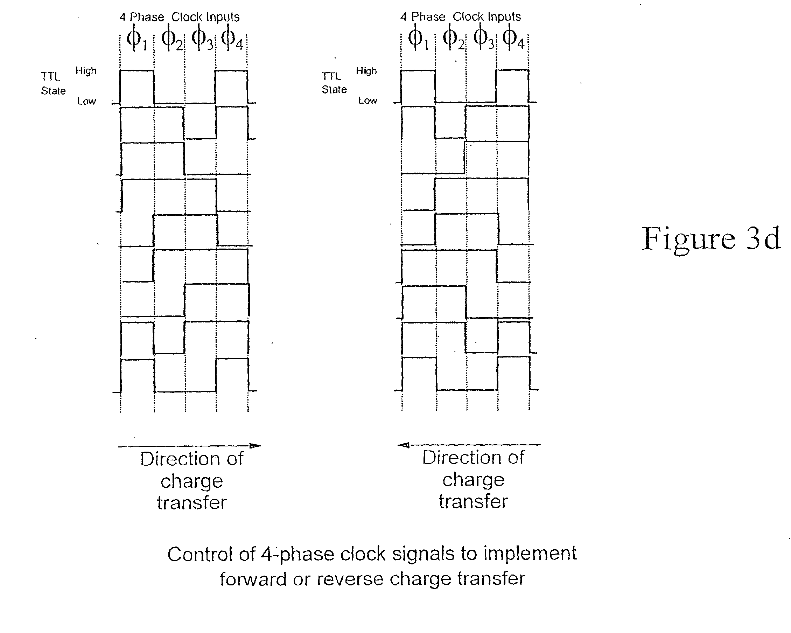

An example demonstrating the operation of a CCD with modulated bi-directional charge transfer is shown in Figure 3. The Figure shows images of two adjacent luminescent samples. In each image the left hand region is a line drawn with a ruthenium-bathophenanthroline complex that has a luminescence decay time of several microseconds, while the right hand region is similarly drawn using a rhodamine sample with nanosecond lifetime. Figure 3a shows the image as measured with a Philips FT12 frame-transfer CCD sensor used in a normal manner without charge-transfer modulation. The excitation source in this case was a 470nm LED modulated between 'on' and 'off' states at a frequency of 125 kHz. Figure 3b shows the effect of modulating the charge transfer across four rows of pixels in a bi-directional manner, phase-locked to the light source. The image of the long-lived emission from the ruthenium complex is split into two sub-images by the modulation process, while that of the prompt fluorescence is unaffected. Figure 3c shows a block diagram of the apparatus used to generate the forward and reverse transfer pulses locked to the modulation of the LED. Figure 3d shows the sequence of electrode control waveforms that are applied to initiate forward and reverse charge transfer in the FT12 sensor used in the experiment. It is to be understood that the waveforms shown are for example only, and other charge transfer schemes based, for example on three-phase 'clock' signals are also possible.

It will be apparent to those skilled in the arts of image-processing, data analysis and luminescence spectroscopy that the concepts disclosed can be modified, for example by measuring a series of images as a function of the relative phase-shift between excitation and detection. The methods of image-processing can also be used to analyse composite images to extract information relating to regions that change under the operations of modulation. It should be understood that the general imaging principles disclosed can be extended to situations where long-and short lifetime components are present in both sub-images, rather than the short-lived component being confined to one such image.

In the example it is presumed for simplicity that the charge transfer is substantially faster than the dwell period for each phase of the imaging, so that distinct images result. This is usually easy to achieve at the modulation frequencies needed to resolve most relatively long-lived luminescent labels. If this is not the case, then the image will be 'smeared' in one dimension in a characteristic manner, making analysis more complicated.

Most background signals have nanosecond lifetimes, while labels are usually chosen with lifetimes of at least several microseconds. Labels such as lanthanides with lifetimes of hundreds of microseconds to more than a millisecond are particularly easily resolved from short-lived background signals.

If the sample of interest is spatially uniform, then the above approach to phase-sensitive imaging is not informative. However, the approach can be modified if the illumination of the sample is patterned. For example, a sample might be illuminated with a periodic striped pattern, or a 'chequered' pattern. The pattern might also be irregular, such as 'speckle' produced by laser interference. The image at the detector must reproduce the pattern with good definition. The detector can only extract information from regions of the image where the spatial frequency of the imaged pattern is similar to the dimensions through which charge is transported. Consequently, the period or average spacing of the pattern should be chosen subject to this constraint. In general, since a patterned illumination will only sample a subset of the object of interest, a series of image sets must be acquired with different pattern, or with a fixed pattern illuminating different areas of the object. After analysis of the modulated component images, composite phase-related images can be reconstructed simulating uniform illumination of the object.

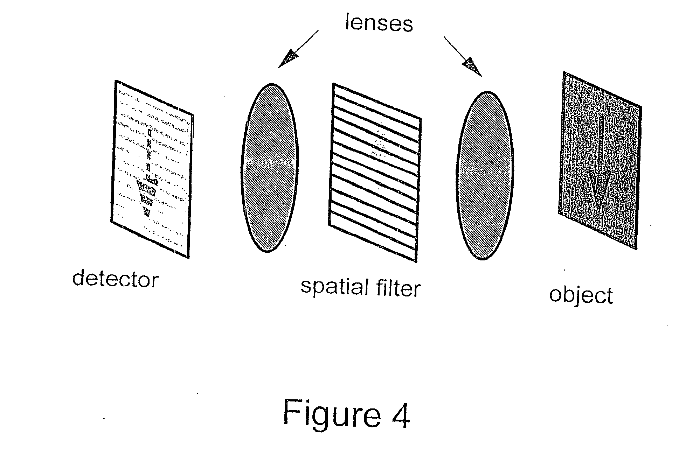

Another method by which the detector of the invention can be used is in a geometry where an intermediate image of a sample is formed. For example, a lens system can be used to form a real image of a sample in a plane where a periodic or aperiodic spatial filter such as a mask or grating is interposed. The spatial filter is then re-imaged onto the detector. The image of the sample is thus spatially filtered at the detector, and the effect is similar to that of using a detector equipped with an integral mask as was discussed previously. This approach has the advantage that the form of the spatial filter can be changed at will to suit the imaging task, and that no custom-built detector is required. The principles of this method are illustrated, for example only and not to scale, in Figure 4. The mask need not have a regular pattern, but it may be necessary to record a series of images with the mask orientation varying between exposures if the resolution of the detector is to be fully utilised. It is advantageous if the mean spacing of the image of the pattern at the detector is of broadly similar size to that of the pixel structures in the detector. A pattern that is too finely spaced will not give rise to the necessary gradients of intensity in the image for the efficient operation of the invention. Similarly, a pattern that is too coarse will give information only from a limited portion of the image corresponding to the edges of the patterned region.

A further means to use the detector of the invention for phase-sensitive imaging provides an alternative to an opaque mask in contact with the detector. A microlens array can be used to direct incoming light to a subset of pixels of the detector. For example, a cylindrical microlens can be used to direct light preferentially to rows or columns of pixels with little or no illumination of other regions of the detector. It can also be advantageous to use a microlens array in conjunction with an optical mask, either to minimise cross-talk between nominally illuminated and unilluminated regions, or simply to increase sensitivity of the masked CCD. A microlens array is used in some types of interline-transfer CCDs to minimise loss of sensitivity caused by the presence of the masked vertical transfer registers. In the context of the present invention, a microlens array, alone or preferably in conjunction with a periodic spatial filter, provides a means to illuminate a standard CCD chip in a selective manner without providing the chip with an integral mask. Thus, a microlens array need not be in physical contact with a semiconductor detector, but could be mounted on a window or fibre-optic 'face-plate' of the detector.

In the present context the term 'microlens' should be taken to include structures other than conventional curved lenses, and includes Fresnel lenses, holograms, zone-plates and gradient-index lenses, for example.

Fibre-optically coupled CCD detectors are commercially available and are commonly used for coupling detectors efficiently to image-intensifiers. The use of such coupling provides a compact arrangement without the need for relay lenses to transmit light from the phosphor screen of the intensifier to the CCD. A CCD equipped with such a fibre-optic coupling could also be used in the present invention, for example with an optical mask in contact with the optical fibre 'face-plate'. Similarly, the fibre-optic can be equipped with an array of microlenses.

In a second embodiment of the invention, an apparatus for phase-sensitive imaging is provided comprising:
* an array detector having light-sensitive pixels arranged in a matrix, each pixel being associated with a plurality of control electrodes capable of being programmed to assume variable patterns of potential, said electrodes being able to control at least movement of light-generated charge from said pixel
   said detector being characterised in that the optically-sensitive area is associated with a matrix of optical filters of at least two types characterised by distinguishable spectral transmission, and/or transmission of polarised light
* control means to generate said patterns of potential in a pre-programmed sequence that alternately transfers charge between adjacent rows or between adjacent columns in a cyclical bi-directional manner, the said charge being moved first in one dircction through a prc-programmcd number of transfers and next in the other direction for the same number of transfers in each cycle, the duration of each transfer or sequence of transfers and the cycling frequency additionally being controlled
* optional synchronisation means whereby the operation of the said control means can be phase-locked to operation of external devices
* programming means to set the parameters of the said control means and optionally other operating parameters of the said apparatus
* readout means to transfer charge or information proportionate thereto to a digitising device for storage and/or display and
* optional computational means to process digitised data and optionally to display information calculated using said data

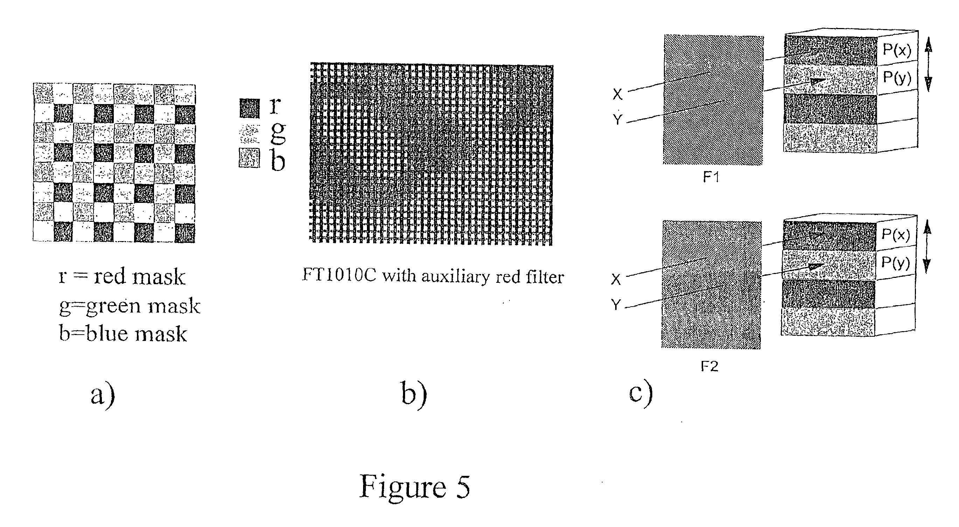

In the cited references a CCD detector having an integral opaque optical mask was disclosed. The present invention recognises that it is not necessary to use an opaque mask to achieve phase-sensitive imaging. A useful alternative is the use of a periodic structure which can be separated into two or more periodic regions of differing transmission in a controlled fashion. For example, but not limitation, a CCD sensor equipped with a mosaic colour filter is suitable for use in the invention. CCDs having mosaic colour filters are commercially available for colour imaging. Two broad types of filter are available, based on a mosaic of red, green and blue filter and on a mosaic of yellow, cyan and magenta filters. Either of these could be used for the purposes of the present invention. For simplicity, the second embodiment of the invention will be illustrated for the case of a CCD having a mask comprising optical filters with different spectral transmission arranged alternately to cover rows of pixels in the detector. The concepts are easily extended to masks composed of more filters in any desired pattern. An example of a detector that has an integral mosaic filter and is suitable for use in the invention is the Philips FTT1010C CCD. The mosaic filter pattern used in this sensor is shown schematically in Figure 5a.

The essence of the second embodiment of the invention is that the use of filters allows pixels to differ in sensitivity, depending on the properties of light reaching the detector. If, for example alternate pixels are masked with red filters and green filters, then if either red light or green light is incident on the detector only half of the pixels will respond. Alternatively, the light reaching the detector might have passed through a filter that transmits both red and green light, but to different extents. If an orange filter is used to condition the light reaching the detector, for example, then the pixels under the red-transmissive filter of the mask will see relatively more signal than those under the green-transmissive regions. If a yellow-transmitting filter is used, then the distribution of signal between red-and green masked regions will be similar, because a typical yellow filter has similar transmission for red light and green light. It is clear from the above that a detector equipped with a mosaic colour filter can be used in a mode where it is as if an opaque mask is present, or it can be used in a mode where it is as if a partially-transmissive mask is present. An example of the effect of imaging through an auxiliary filter is shown in Figure 5b. Here an enlarged view of an image taken with a Philips 1010C sensor is presented. The sensor has an integral 'RGB' mosaic filter array. The image was recorded through a red-transmissive filter.

If a pre-filter is used to condition the incident light so as to allow only a subset of the pixels to respond, then the charge-transfer modulation scheme described earlier can be used for phase-sensitive imaging. If however the pre-filter is one that weights the contribution of the masked pixels in a characteristic way, but allows both to respond, then the modulation scheme must be modified for phase-sensitive imaging. In the latter case it is necessary to measure an image with charge-transfer modulation under at least two conditions, where the relative weightings accorded to the masked pixels of the detector is varied. This can be achieved by sequential measurements using a pair of pre-filters, for example. The principles of this approach are set out in Figure 5c. Basically, for each pixel in the image, measurement with at least a pair of pre-filters (or with a pre-filter and without a pre-filter) can be resolved into component contributions to each phase of the modulation process by simple solution of simultaneous equations (e.g. using well-known techniques of matrix algebra). Thus, for example, in Figure 5c light from points X and Y passes through a common spectral filter and is detected by pixels P(x) and P(y), each of which has a different integral optical filter. In the example the objects at X and Y are illuminated with a light source that is modulated in an 'on'-'off' fashion and charges in the detector are simultaneously clocked bi-directionally between P(x) and P(y). If the charge-transfer modulation is in-phase with the modulation of the light then P(x) will accumulate signal that is a weighted function of the in-phase signal from X and the anti-phase signal from Y. Using filter F1, the resulting integrated signal can be written as P(x)₁ = aXₚₕₐₛₑ +bYₐₙₜᵢₚₕₐₛₑ. Using filter F2 gives a similar result, but with different weightings. Thus, P(x)₂ = cXₚₕₐₛₑ +dY_{antiphase.} These are two equations in two unknowns, since the coefficients a,b,c,d are properties of the joint action of the filters F1 and F2 and the integral filters, and are easily measured. Thus, the in-phase component of signal from X and the anti-phase component from Y can be calculated. The other components Xₐₙₜᵢₚₕₐₛₑ and Yₚₕₐₛₑ can be measured similarly by modulating charge transfer in anti-phase to the operation of the light source. The principles of the method can also be used with a mask comprising different polarising elements, where the polarisation of the incident light is varied in order to alter the relative sensitivity of masked pixels.

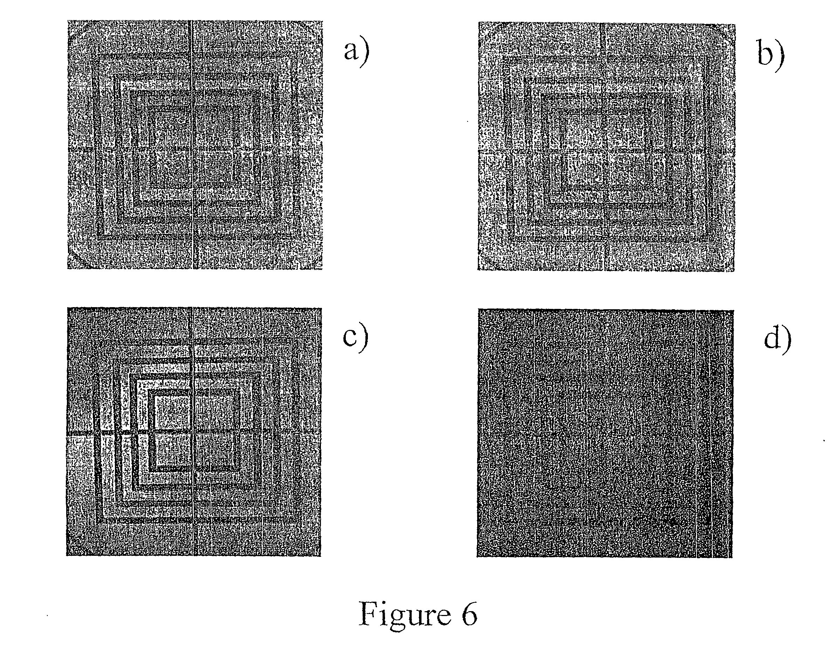

An example of the use of a CCD detector with an integrated mosaic colour filter in conjunction with an auxiliary filter is shown in Figure 6. A test pattern is illuminated with a blue light-emitting diode (LED) source that is not modulated in intensity. The detector is a Philips 1010C CCD with an auxiliary blue-transmissive filter that blocks light to pixels masked with red and green integral filters. Bi-directional charge transfer was imposed on the detector at a frequency of 200 kHz. Figures 6a and 6b show sub-images from the detector showing response of areas masked with integral blue-transmissive filters and red-transmissive filters respectively. In this mode there is no substantial difference between these images. The charge-transfer modulation results in charges accumulated in blue-transmissive regions being transferred also to neighbouring pixels that are substantially insensitive to blue light. Figures 6c and 6d on the other hand show corresponding sub-images that demonstrate the effect of modulating the intensity of the LED synchronously with the charge-transfer modulation. In this case the LED is substantially 'off' when charge accumulated under blue-transmissive pixels has been transferred to the alternate masked pixels. Thus, the sub- images under the red- and blue-masked pixels are markedly different in signal level.

The embodiment of the invention described above has the advantage that appropriate CCDs are easily available. In contrast to the use of an opaque mask, the use of a CCD with a mosaic filter in conjunction with a set of pre-filters has the further advantage that spatial resolution can be increased, since a weighted contribution from all pixels in the sensor is used in construction of the final composite phase-resolved image. The use of a colour mosaic filter is well-suited to phase-sensitive imaging of fluorescent and phosphorescent labels. Such emission usually covers a significant spectral range, and is easily conditioned by pairs of optical filters that each transmit a different subset of the emission.

If a commercial detector array equipped with a composite mask of three different filters is used in the invention, it is possible to detect phase-resolved images in two wavelength ranges simultaneously, For example, if an array having alternating filters transmitting red, blue and green light is used with a yellow-transmitting pre-filter, the 'blue' pixels are insensitive to light passing through the pre-filter, and hence can be used as charge-storage region as if 'masked'. Thus, phase-sensitive images of red light and green light could be measured simultaneously, since the pre-filter transmits both of these efficiently. This mode of operation is particularly suited to phase-sensitive imaging of luminescence from two labels simultaneously.

The embodiments of the invention thus far described rely on cyclical movement of charges within the detector. Thus, the array must be capable of bi-directional charge transfer. Some types of detector can be used for phase-sensitive measurements without this limitation. This gives rise to a further embodiment of the invention as described below.

In a third embodiment of the invention, an apparatus for phase-sensitive imaging is provided comprising:
* an array detector having light-sensitive pixels arranged in a matrix, each pixel being associated with a plurality of control electrodes capable of being programmed to assume variable patterns of potential, said electrodes being able to control movement of light-generated charge from said pixel and to control the centroid of charge collection and determine the spatial region surrounding said centroid from which charge is gathered,
* control means to generate said patterns of potential in a pre-programmed sequence that cyclically changes the effective sensitivity of said pixels by changing the spatial extent from which charge is collected into said pixel, said sequence being programmable in frequency and duration
* programming means to set the parameters of the said control means and optionally other operating parameters of the said apparatus
* synchronisation means whereby the operation of the said control means can be phase-locked to operation of external devices
* readout means to transfer charge or information proportionate thereto to a digitising device for storage and/or display and
* optional computational means to process digitised data and optionally to display information calculated using said data.

Optionally the detector of this embodiment can be associated with a mask that might be opaque or comprising a mosaic of filters or polarisers.

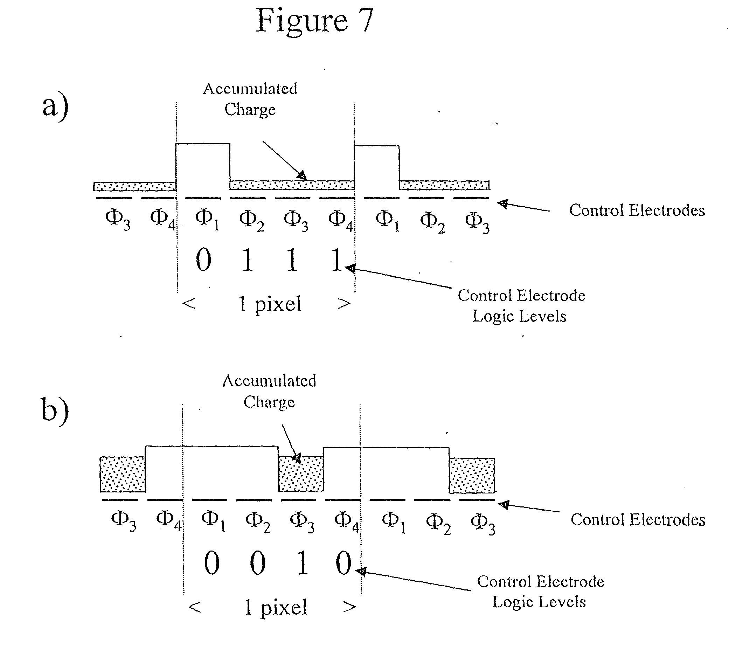

The principles of this embodiment of the invention are set out in Figure 7. The invention takes advantage of the fact that the potential well into which charge is collected can be manipulated by varying the pattern of potentials on a set of control electrodes (Φ1-Φ4) for each pixel. These electrodes define the pixel structure in conjunction with the physical architecture of the detector. In Figure 7 a fixed amount of charge is shown, confined in a potential well set up by the control electrodes. Two situations are illustrated, where the extent of the charge-collection area is varied. Charge generated outside of the charge-collection area is lost to the substrate of the sensor. If the control electrodes are alternately switched between the conditions shown in the Figure, then the charge in the potential well is conserved. The amount of charge that can flow into the well under constant illumination varies synchronously as the potential well is cyclically altered. Pixel sensitivity is thus modulated by variation of the effective pixel 'size' in response to the pattern of potential on the control electrodes. The sensor in this mode is effectively an integrating detector with cyclically modulated sensitivity.

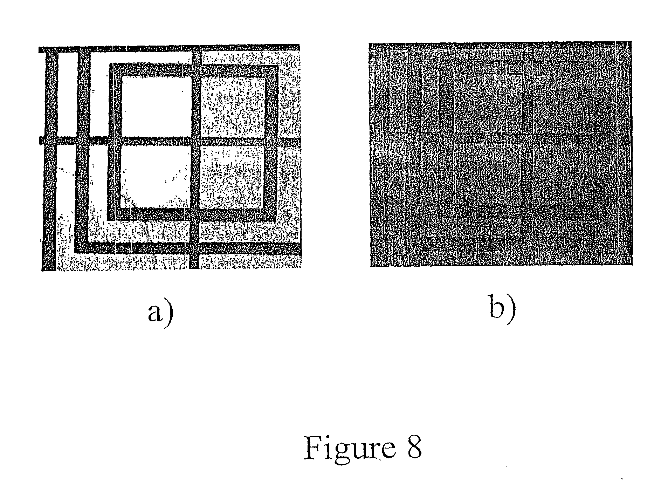

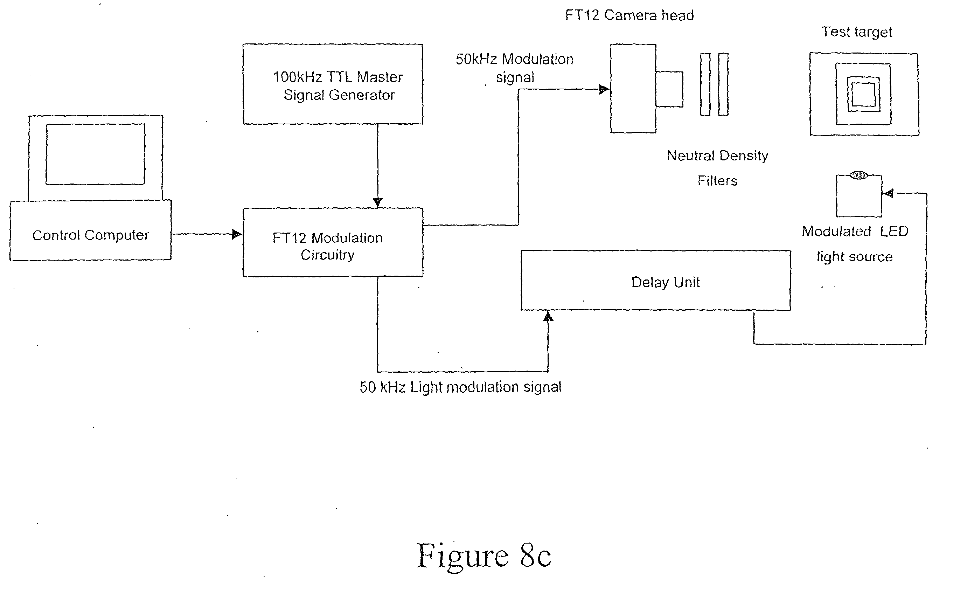

The modulation scheme described above is not possible with all sensors, but can be implemented with sensors such as the Philips FT12 for example. An example of this mode of modulation are shown in Figure 8. Figures 8a and 8b show images of a test target illuminated with a blue-emitting LED modulated with a square wave signal phase-locked to the modulation of the pixel controls in a Philips FT12 CCD sensor. In Figure 8a the 'on' period of the LED is co-incident with the period of highest sensitivity (where the spatial extent of charge collection is greatest) of the sensor, whereas for Figure 8b this corresponds to the period of lower sensitivity. Figure 8c shows a schematic diagram of the apparatus used to measure these images. In the Figure, the delay unit allows the relative phases of the modulation applied to the LED source and the CCD sensor to be varied.

The modulation scheme described does not require a masked image sensor, and can therefore be used with commercial sensors without modification. However, it can be advantageous to use the modulation mode in conjunction with a 'masked' sensor. For example, a sensor equipped with a periodic opaque mask where charge can be transferred bi-directionally and which is also capable of modulation by control of the spatial extent of charge-collection might be used. As an example, but without limitation, the modulation mode using the bi-directional transfer might be operated at a low frequency, with a higher frequency modulation imposed by varying the spatial extent of charge-collection. By this means, an image can be collected that is the sum of two independent interleaved images. This can be useful, for example if the interleaved images are modulated at different relative phases, such as in-phase and inquadrature or anti-phase to a stimulus such as a fluctuating light source illuminating the sample. Alternatively, interleaved images can be collected that are modulated at different frequencies by the 'charge-collection' mechanism. The collection of interleaved images is advantageous since any 'drift' in the properties of sample or illumination source for example affect both sub-images equally and are averaged over the exposure period. The use of interleaved imaging is particularly suited to measurements of fluorescence and phosphorescence decay processes by phase-sensitive detection. In such a case, the luminescence is excited by a pulsed or modulated light source and the phase-shift and/or demodulation of emission is calculated to measure the decay parameters of interest. This is typically performed by measurements using a modulated detector, systematically varying the relative phase of the detector modulation relative to the source modulation. Details of the principles of this method are given in our US patent 5,495,323.

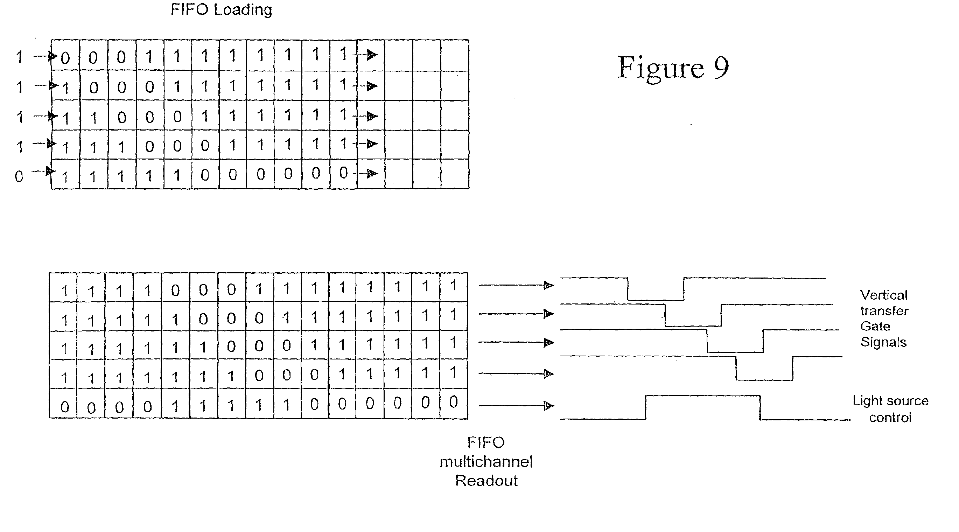

It is possible to implement the required signals to control operation and/or modulation of the detector and associated apparatus by standard techniques of digital logic, using either individual 'hard-wired' components or by use of a programmable logic array, for example. Preferably, however, the timing sequences of electronic pulses necessary to operate the apparatus of the invention are provided as a stored binary sequence in a semiconductor memory, which can be programmed by an external device such as a computer. Most preferably the memory device is a 'First-In, First-Out' (FIFO) device. This method allows the operating parameters of the detector to be varied dynamically. An example for illustration only is given in Figure 9, which shows how data loaded into a FIFO can be used to generate a sequence of vertical-transfer pulses such as are needed to operate the four-phase charge-transfer operations of sensors such as the Philips FT12 CCD. In the example, a '1' in the FIFO produces a 'high' signal for one 'clock-cycle' on the corresponding channel, whereas a '0' produces a 'low' signal.

The apparatus of the embodiments of the invention is particularly useful for the collection of phase-resolved images from luminescent samples. Such detection is useful, for example, for purposes such as measurement of luminescence decay parameters from regions of the sample, multiplexed detection of luminescent labels on the basis of decay time alone, or in conjunction with spectral discrimination, and rejection of unwanted signals on the basis of luminescence decay time. Phase-resolved imaging can also be useful where luminescence decay time is not of interest. For example, but not limitation, a pair of excitation sources emitting light at different wavelengths can be operated in sequence with the a phase-sensitive detector using charge-transfer modulation. By this means an interleaved pair of images is recorded, each being excited in a different wavelength range. A similar effect can be achieved if a rapidly-tuneable optical filter (such as an acousto-optic tuneable filter or a liquid-crystal tuneable filter for example) is used to collect light from a sample in two interleaved images recorded in different wavelength regions. Such interleaved images can optionally be combined, for example ratiometrically, to reveal characteristic information. Ratiometric imaging of fluorescence using pairs of excitation wavelengths is widely used in biological research to image distributions of pH and metal ions such as calcium. Similar measurements are also used with a fixed excitation wavelength but with a pair of emission filters to detect fluorescence in two wavelength regions. The apparatus of the invention can also be used for combined measurements where, for example, both decay-time related information and wavelength-related information of a sample are of interest.

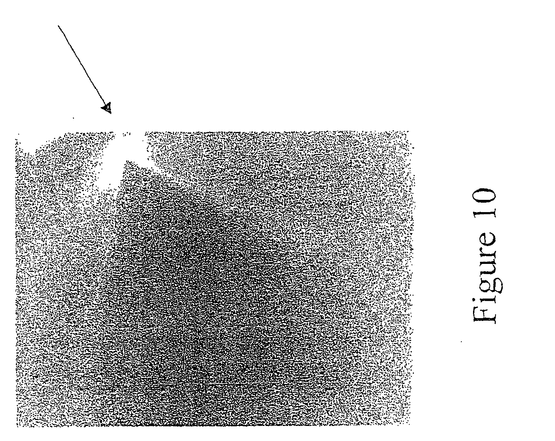

An example of a fluorescence decay-time-related image is presented in Figure 10. The Figure shows a surface coated with an oxygen-sensitive polymer containing a bathophenanthroline complex of ruthenium. The complex is excited by a blue-emitting LED source modulated with a square wave at 150kHz. A jet of nitrogen gas impinges on the polymer at the point marked with an arrow. The effect of the nitrogen is to relieve oxygen quenching of the ruthenium emission, and hence to increase emissive lifetime of the complex. The image shown is calculated from the ratio of interleaved images recorded using a red-transmissive auxiliary filter in conjunction with a Philips 1010C CCD sensor. The charge-transfer in the sensor is modulated bi-directionally between rows of pixels in synchrony with the operation of the LED source. Thus, interleaved images are recorded in-phase and in-antiphase with the excitation source (i.e. with the LED 'on' and 'off' respectively). The contrast apparent in the image is related to the lifetime of the ruthenium emission, and does not reflect spatial variations in illumination intensity or variations in polymer thickness.

According to a further embodiment the invention provides a method of measuring luminescence information phase-locked to an exciting light source from a sample, the method comprising the steps of:
* providing an array detector having light-sensitive pixels arranged in a matrix, each pixel being associated with a plurality of control electrodes capable of being programmed to assume variable patterns of potential, said electrodes being able to control transfer of light-generated charge from said pixel to neighbouring pixels in a bi-directional manner
   said detector being characterised in that it is not equipped with an integrated opaque striped mask covering alternate rows of pixels
* providing readout means by which said light-generated charge or a representation thereof can be digitised for storage and computation
* providing control means to initiate bi-directional transfer of said charges between designated pixels, said control means providing said patterns of potential according to a predetermined sequence
* providing light source means for excitation of luminescence from a sample
* providing modulation means able to initiate pulsing and/or modulation of the light from the said light source according to a predetermined modulation and/or pulsing sequence with predetermined timing
* providing synchronisation means whereby the modulation and/or pulsing of said light source means can be phase-locked with a predetermined time-relationship to the operation of the said control means
* optionally providing programming means whereby said predetermined sequences and/or time relationship can be defined
* providing means to collect luminescence from said sample and to direct said luminescence to the said detector array
* activating said light source means and said modulation means synchronised with the operation of said control means for a predetermined period with predetermined modulation and control schemes and a predetermined synchronisation time relationship, said exciting light and/or detected luminescence being optionally filtered by first spectral and/or polarisation filters
* activating said readout means to record a representation of the charge pattern stored in the detector
* optionally repeating the said activation steps with modification of at least one of the first predetermined parameters and/or substitution of a second set of spectral and/or polarisation filters and
* optionally computing information from said recorded representations.

Preferably the modulation and/or pulsing of the light source means is a cyclical process and integration of charge proceeds for more than one cycle of the modulation and/or pulsing before readout.

According to another embodiment the invention provides a method of measuring luminescence information phase-locked to an exciting light source from a sample, the method comprising the steps of:
* providing an array detector having light-sensitive pixels arranged in a matrix, each pixel being associated with a plurality of control electrodes capable of being programmed to assume variable patterns of potential, said electrodes being able to control the centroid of charge collection and determine the spatial region surrounding said centroid from which charge is gathered and optionally to control transfer of light-generated charge from said pixel to neighbouring pixels in a bi-directional manner
* providing readout means by which said light-generated charge or a representation thereof can be digitised for storage and computation
* providing control means to vary the said spatial extent of charge collection associated with such pixels and optionally to initiate bi-directional transfer of said charges between designated pixels, said control means providing said patterns of potential to said control electrodes according to a predetermined sequence
* providing light source means for excitation of luminescence from a sample
* providing modulation means able to initiate pulsing and/or modulation of the light from the said light source means according to a predetermined modulation and/or pulsing sequence with predetermined timing
* providing synchronisation means whereby the modulation and/or pulsing of said light source means can be phase-locked with a predetermined time-relationship to the operation of the said control means
* optionally providing programming means whereby said predetermined sequences and/or time relationship can be defined
* providing means to collect luminescence from said sample and to direct said luminescence to the said detector array
* activating said light source means and said modulation means synchronised with the operation of said control means for a predetermined period with predetermined modulation and control schemes and a predetermined synchronisation time relationship, said exciting light and/or detected luminescence being optionally filtered by first spectral and/or polarisation filters
* activating said readout means to record a representation of the charge pattern stored in the detector
* optionally repeating the said activation steps with modification of at least one of the first predetermined parameters and/or substitution of a second set of spectral and/or polarisation filters and
* optionally computing information from said recorded representations.

The methods of the invention are particularly suited to the acquisition of fluorescence or phosphorescence decay-time-related information (e.g. measurements of emissive lifetime of luminescence or acquisition of time-gated or weighted images).

In the methods described the light source means is pulsed and/or modulated. Such modulation and/or pulsing is not limited to the intensity of the light source, and could be a modulation and/or pulsing of another parameter such as excitation wavelength or polarisation. Equally, the modulation and/or pulsing might act on more than one such parameter. As an example, and without limitation, a plurality of light-emitting diodes, each emitting at a different range of wavelengths across the absorption band of a sample, might form the light source means of the invention. In such a case, each such diode could be activated sequentially to produce a brief pulse of light and the modulation might be in the form of a sequence of such pulses, each of a predetermined wavelength and intensity, for example. Such a light source could be used to provide selective modulation of the excitation of a component of a sample, based on the shape of the excitation spectral profile of the component relative to the wavelengths and intensities in the sequence.

Preferably the modulation and/or pulsing of the light source means is a cyclical process and integration of charge proceeds for more than one cycle of the modulation and/or pulsing before readout.

The methods of the invention can be used in combination with 'normal' (i.e. non-modulated or 'DC') imaging modes of a detector for calculation of decay-time-related information. Thus, for example, if an image is recorded with a modulated detector having a fixed phase relationship to a pulsed or modulated light source, then this information might be used in conjunction with a normal image measured without modulation to calculate an image with a complementary phase relationship. This mode of operation can be advantageous as the 'noise' performance of some detectors is degraded by modulation. In addition a 'normal' image is measured with the exciting light 'on' at all times, and hence the exposure time for a given integrated charge level is shorter than if the light is modulated.

The apparatus of the invention is preferably equipped with a means to allow spectral filters and/or polarisers to be used in conjunction with the detector, and such filters to be changed between measurements where appropriate. This permits measurements with and without spectral and/or polarisation modification of the incident light reaching the detector, or measurement with a series of spectral and/or polarisation filters. The methods of the invention may require such sequential measurements in some circumstances, for example where a detector equipped with a colour mosaic filter is used with a pair of optical filters to resolve phase-sensitive images as discussed above. The filters need not be physically changed, but might in some cases be tuneable in spectral transmission and/or polarisation. Thus liquid-crystal tuneable filters and the like that are electrically controlled are, for example, suited to the invention.

## Claims

1. An apparatus for phase-sensitive imaging comprising:
* an array detector having light-sensitive pixels arranged in a matrix, each pixel being associated with a plurality of control electrodes capable of being programmed to assume variable patterns of potential, said electrodes being able to control at least movement of light-generated charge from said pixel
said detector being **characterised in that** the light-sensitive region of the detector is not associated with a striped opaque mask covering alternate rows of pixels
* control means to generate said patterns of potential in a pre-programmed sequence that alternately transfers charge between adjacent rows or between adjacent columns in a cyclical bi-directional manner, the said charge being moved first in one direction through a pre-programmed number of transfers and next in the other direction for the same number of transfers in each cycle, the duration of each transfer or sequence of transfers and the cycling frequency additionally being controlled
* optional synchronisation means whereby the operation of the said control means can be phase-locked to operation of external devices
* programming means to set the parameters of the said control means and optionally other operating parameters of the said apparatus
* readout means to transfer charge or information proportionate thereto to a digitising device for storage and/or display and
* optional computational means to process digitised data and optionally to display information calculated using said data.

2. An apparatus for phase-sensitive imaging comprising:
* an array detector having light-sensitive pixels arranged in a matrix, each pixel being associated with a plurality of control electrodes capable of being programmed to assume variable patterns of potential, said electrodes being able to control movement of light-generated charge from said pixel and to control the centroid of charge collection and determine the spatial region surrounding said centroid from which charge is gathered,
* control means to generate said patterns of potential in a pre-programmed sequence that cyclically changes the effective sensitivity of said pixels by changing the spatial extent from which charge is collected into said pixel, said sequence being programmable in frequency and duration
* optional synchronisation means whereby the operation of the said control means can be phase-locked to operation of external devices
* programming means to set the parameters of the said control means and optionally other operating parameters of the said apparatus
* readout means to transfer charge or information proportionate thereto to a digitising device for storage and/or display and
* optional computational means to process digitised data and optionally to display information calculated using said data.

3. An apparatus according to claims 1 or 2 wherein the detector has no integral patterned mask.

4. An apparatus according to claim 3 wherein optical means are provided to relay an image from an intermediate plane to a plane containing the said detector and a patterned mask is placed at the said intermediate plane.

5. An apparatus according to claim 4 wherein said optical means is a fibre-optic light guide.

6. An apparatus according to claim 4 wherein said optical means is a lens system.

7. An apparatus according to claim 3 wherein a microlens array or zone-plate array is used to direct incident light to a subset of pixels forming a periodic or aperiodic sub-array

8. An apparatus according to claim 7 wherein the microlens is placed in contact with a fibre-optic light guide conveying light to the detector

9. An apparatus according to claims 1 or 2 wherein the detector has an integral opaque mask covering columns of pixels

10. An apparatus according to claims 1 or 2 wherein the detector has an integral opaque aperiodic mask

11. An apparatus according to claims 1 or 2 wherein the detector has an integrated mosaic of optical filters of at least two types having differing spectral transmissions and/or different transmissions for light of a given polarisation state

12. An apparatus according to claim 11 wherein the detector is additionally equipped with at least one auxiliary filter that preconditions the spectral distribution and/or polarisation of light reaching the said mosaic of optical filters

13. An apparatus according to claim 12 wherein said auxiliary filter transmits light that is substantially transmitted by at least one of the said types of integrated filter and substantially blocked by at least one other of the said integrated filters

14. An apparatus according to claim 2 that has an integrated striped opaque mask covering rows of pixels

15. An apparatus according to any preceding claim that has associated a filter changing means to allow sequential measurements of light with and without auxiliary spectral and/or polarising filters or with two or more such filters or with a single tuneable filter

16. An apparatus according to any preceding claim wherein control signals are stored as a binary pattern in a semiconductor memory

17. An apparatus according to any one of claims 1 to 16 measurement of decay-time related information of a sample

18. A method of measuring luminescence information phase-locked to an exciting light source from a sample, the method comprising the steps of:
* providing an array detector having light-sensitive pixels arranged in a matrix, each pixel being associated with a plurality of control electrodes capable of being programmed to assume variable patterns of potential, said electrodes being able to control transfer of light-generated charge from said pixel to neighbouring pixels in a bi-directional manner
said detector being **characterised in that** it is not equipped with an integrated opaque striped mask covering alternate rows of pixels
* providing readout means by which said light-generated charge or a representation thereof can be digitised for storage and computation
* providing control means to initiate bi-directional transfer of said charges between designated pixels, said control means providing said patterns of potential according to a predetermined sequence
* providing light source means for excitation of luminescence from a sample
* providing modulation means able to initiate pulsing and/or modulation of the light from the said light source according to a predetermined modulation and/or pulsing sequence with predetermined timing
* providing synchronisation means whereby the modulation and/or pulsing of said light source means can be phase-locked with a predetermined time-relationship to the operation of the said control means
* optionally providing programming means whereby said predetermined sequences and/or time relationship can be defined
* providing means to collect luminescence from said sample and to direct said luminescence to the said detector array
* activating said light source means and said modulation means synchronised with the operation of said control means for a predetermined period with predetermined modulation and control schemes and a predetermined synchronisation time relationship, said exciting light and/or detected luminescence being optionally filtered by first spectral and/or polarisation filters
* activating said readout means to record a representation of the charge pattern stored in the detector
* optionally repeating the said activation steps with modification of at least one of the first predetermined parameters and/or substitution of a second set of spectral and/or polarisation filters and
* optionally computing information from said recorded representations.

19. A method of measuring luminescence information phase-locked to an exciting light source from a sample, the method comprising the steps of:
* providing an array detector having light-sensitive pixels arranged in a matrix, each pixel being associated with a plurality of control electrodes capable of being programmed to assume variable patterns of potential, said electrodes being able to control the centroid of charge collection and determine the spatial region surrounding said centroid from which charge is gathered and optionally to control transfer of light-generated charge from said pixel to neighbouring pixels in a bi-directional manner
* providing readout means by which said light-generated charge or a representation thereof can be digitised for storage and computation
* providing control means to vary the said spatial extent of charge collection associated with such pixels and optionally to initiate bi-directional transfer of said charges between designated pixels, said control means providing said patterns of potential to said control electrodes according to a predetermined sequence
* providing light source means for excitation of luminescence from a sample
* providing modulation means able to initiate pulsing and/or modulation of the light from the said light source means according to a predetermined modulation and/or pulsing sequence with predetermined timing
* providing synchronisation means whereby the modulation and/or pulsing of said light source means can be phase-locked with a predetermined time-relationship to the operation of the said control means
* optionally providing programming means whereby said predetermined sequences and/or time relationship can be defined
* providing means to collect luminescence from said sample and to direct said luminescence to the said detector array
* activating said light source means and said modulation means synchronised with the operation of said control means for a predetermined period with predetermined modulation and control schemes and a predetermined synchronisation time relationship, said exciting light and/or detected luminescence being optionally filtered by first spectral and/or polarisation filters
* activating said readout means to record a representation of the charge pattern stored in the detector
* optionally repeating the said activation steps with modification of at least one of the first predetermined parameters and/or substitution of a second set of spectral and/or polarisation filters and
* optionally computing information from said recorded representations.

20. A method according to claim 19 wherein the said detector is equipped with an optical mask and the operations of bi-directional charge transfer and control of the spatial extent of charge collection are jointly utilised to divide the collected charge into at least two interleaved sets differing in at least one the said predetermined parameters and/or differing in utilisation of said spectral and/or polarisation filters.

21. A method according to any one of claims 18 to 20 wherein the modulation and/or pulsing of the light source means is a cyclical process and integration of charge proceeds for more than one cycle of the modulation and/or pulsing before readout.

22. A method according to any one of claims 18 to 21 wherein data recorded under two or more settings of said predetermined parameters and/or utilisation of spectral and/or polarisation filters are combined to calculate luminescence decay-time-related information of a sample.

23. A method according to any one of claims 18 to 22 wherein a data set is collected without modulation and/or pulsing of at least one of either the detector control means or the light source means, and said data set is used for calculation of luminescence decay-time-related information of a sample in conjunction with at least one other related data set wherein said modulation and/or pulsing of both detector control means and said light source means is activated

24. A method according to any one of claims 18 to 23 wherein the said luminescence information is related to the luminescence decay time of the sample or a component thereof
